# EUROPEAN PATENT SPECIFICATION

(11) **EP 2 190 132 B1**
(45) Date of publication and mention of the grant of the patent: **08.03.2017**
(21) Application number: 10154412.0
(22) Date of filing: 09.08.2000
(51) Int. Cl.: H04B 7/08, H01Q 3/36

(54) **Front end for a mobile communication device**
Frontend für ein mobiles Kommunikationsgerät
Unité frontale pour un appareil de communication mobile

(43) Date of publication of application: 26.05.2010
(62) Divisional of application: 00117043.0
(73) Proprietor: IPCom GmbH & Co. KG, 82049 Pullach (DE)
(72) Inventor: Knudsen, Mikael B., 9260 Gistrup (DK); Pedersen, Gert Frolund, 9280 Storvorde (DK)
(74) Representative: Molnia, David

(56) References cited:
- EP-A2- 1 014 480
- WO-A2-96/08850
- DE-A1- 4 321 805
- US-A- 5 280 637

## Description

The present invention relates to a front end for a mobile communication device.

EP 1 014 480 A2 discloses a base station receiver which directs the center of the main beam of the antenna directivity response in a desired direction by passing signals received by the n antenna elements through a phase shifter. An output from the phase shifter is passed through a receiving filter and is then amplified by a low noise amplifier to be delivered as an output.

WO 96/08850 relates to a radio transmission system comprising at least one radio apparatus which comprises a receiving arrangement with at least two receiver front-ends which are coupled to an array of at least two antennas and combining means so as to form beams. Such a system can be a mobile radio system, a cordless telephony system, a paging system, a car radio broadcast system, a GPS (Global Positioning System), an in-house audio link system or home-cast system, wireless headphones, or any other radio transmission system.

It is an object of the present invention to improve a front end for a mobile communication device.

The object is achieved by a front end for a mobile communication device according to claim 1.

In a further preferred embodiment of the invention the phase shifter comprises a transmission line. In a further preferred embodiment of the invention the front end is implemented as an integrated circuit.

In a further preferred embodiment of the invention a phase shifting unit provides for a phase shift between 10° and 90°, in particular for a phase shift of 45° or 90° .

In a further preferred embodiment of the invention at least one phase shift unit comprises at least one inductive element and at least one capacitor.

In a further preferred embodiment of the invention the inductive element and the capacitor are dimensioned such that they can be implemented in an integrated circuit.

In a further preferred embodiment of the invention the mobile communication device comprises at least two antennas, a first antenna and a second antenna.

In a further preferred embodiment of the invention the first antenna is connected to the first input of the front end.

In a further preferred embodiment of the invention the second antenna is connected to the second input of the front end.

In a further example the mobile communication device is a CDMA mobile system with a rake receiver disclosed, e.g. in Price, R. et al., "A Communication Technique for Multipath Channels," Proceedings of the IRE, 1958, vol. 46, pp. 555-570.

Further preferred embodiments, and advantages of the present invention will become apparent from the claims and the description below, based on the drawings, in which:
- FIG. 1: shows a mobile communication device,
- FIG. 2: shows a receiver arrangement,
- FIG. 3: shows a front end,
- FIG. 4: shows a phase shifting element, and
- FIG. 5: shows a phase shifter.

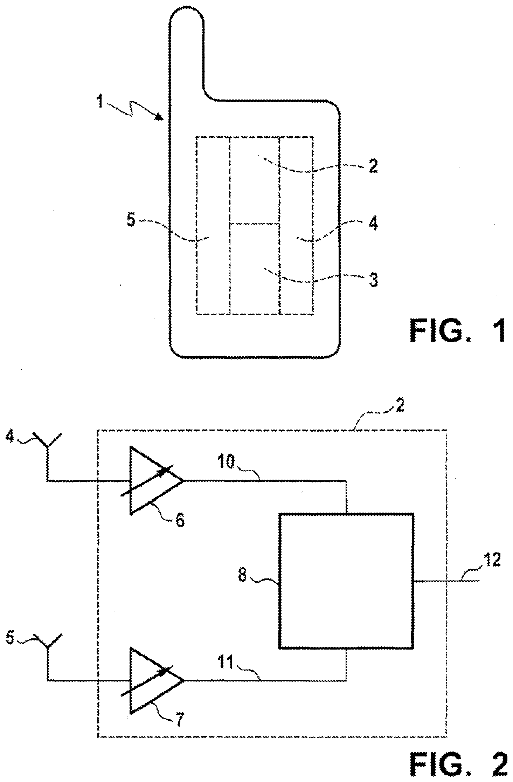

FIG. 1 shows a mobile communication device 1. The mobile communication device 1 is in the present embodiment a mobile phone for a European Telecommunications Standard Institute system or Universal Mobile Telecommunications system, an Association of radio Industries and Businesses Wideband Code Division Multiple Access communications system, and/or a Wideband Code Division Multiple Access system being defined by 3^{rd} Generation Partnership Project communications system.

The mobile communication device 1 may be a multi-mode mobile station, capable of operating, for example in a Global System for Mobile Telecommunications (GSM) system as well as a UMTS system.

The mobile communication device 1 comprises the receiver arrangement 2, processing means 3, a first antenna 4, and a second antenna 5. The receiver arrangement 2 receives signals from a base station (not shown) by means of the first antenna 4 and the second antenna 5. The processing means 3, among many other tasks, process signals received from the receiver arrangement 2. The mobile communication device 1 may further comprise additional circuitry, filter means, processing means, storage means, man machine interfaces and so on.

FIG. 2 shows the first antenna 4 and the second antenna 5 as well as the receiver arrangement 2 in more detail. The receiver arrangement 2 comprises a first amplifier 6 and a second amplifier 7. The amplifiers 6 and 7 are preferably tunable. The output of the first amplifier is connected to a first input 10 of a front end 8. The output of second amplifier 7 is connected to a second input 11 of the front end 8. Reference number 12 denotes an output of the front end 8.

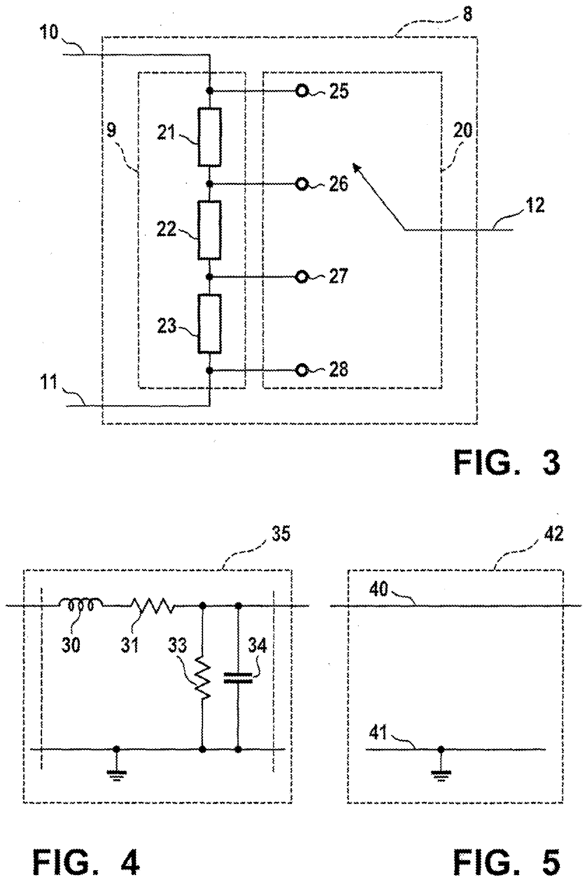

FIG. 3 shows the front end 8 in more detail. The front end 8 comprises the phase shifter 9 between the first input 10 and the second input 11 capable of shifting the phase of a first signal traveling through the phase shifter 9 from the first input 10 to the second input 11 by a predetermined phase shift and capable of shifting the phase of a second signal traveling through the phase shifter 9 from the second input 11 to the first input 10 by the predetermined phase shift. In the shown embodiment the predetermined phase shift is 270°.

The phase shifter 9 comprises in the current example three phase shifting elements 21, 22 and 23. Each of these phase shifting elements 21, 22 and 23 provides for a phase shift of 90°. The phase shifter 9 provides at a first point 25 a signal being the sum of the first signal and the second signal being delayed by 270°. The phase shifter 9 provides at a second point 26 a signal being the sum of the first signal being delayed by 90° and the second signal being delayed by 180°. The phase shifter 9 provides at a third point 27 a signal being the sum of the first signal being delayed by 180° and the second signal being delayed by 90° . The phase shifter 9 provides at a fourth point 28 a signal being the sum of the first signal being delayed by 270° and the second signal.

The front end 8 further comprises the selector 20 for selecting a signal of one of the points 25, 26, 27 or 28 and for providing it as an output signal at the output 12.

FIG. 4 shows a preferred embodiment of a phase shifting element 35 which can be used as phase shifting element 21, 22 and/or 23. The phase shifting element 35 comprises an inductive element 30, two resistors 31 and 33, and a capacitor 34. The ratio of the inductivity of the inductive element 30 and the capacitance of the capacitor 34 is preferably in the vicinity of 2,5.

FIG. 5 shows a phase shifter 42 which can be used as an embodiment of the phase shifter 9 or a phase shifting element 21, 22 and/or 23. The phase shifter 42 comprises a transmission line 40 and a second line 41.

Phase shifters 9 and 42 and phase shifting element 35 are preferably implemented in an integrated circuit.

The receiver arrangement 2 in particular the front end 8 as well as the first antenna 4 and the second antenna 5 are designed to operate approximately in the frequency range of 1 through 2 GHz. They are in particular designed to operate in a frequency range of one, more, or all of the following frequency bands:

| | |
|---|---|
| GSM-900 | 925-960 MHz |
| GSM1800 | 1805-1880 MHz |
| GSM1900 | 1930-1990 MHz |
| UMTS FDD | 2110-2170 MHz |
| UMTS TDD | 2010-2025 MHz |

## Claims

1. Front end (8) for a mobile communication device (1), which is a cell phone or mobile computer, in particular according to GSM or UMTS standard, the front end comprising at least two inputs, a first
input (10) and a second input (11),
comprising a phase shifter (9, 42) capable of shifting the phase of a first signal traveling through the phase shifter (9, 42) from the first input (10) to the second input (11) by a predetermined phase shift and capable of shifting the phase of a second signal traveling through the phase shifter (9, 42) from the second input (11),
wherein the front end (8) comprises a selector (20) for selecting an output signal between the first input (10) and the second input (11),
**characterized in that**
the selector (20) is capable of selecting the output signal such that the output signal is the sum of the first signal being delayed by a first phase shift between 0 and the predetermined phase shift and the second signal being delayed by a second phase shift being the difference between the predetermined phase shift and the first phase shift, wherein the phase shifter (9, 42) comprises at least two, in particular three, phase shifting units (21, 22, 23, 35), a phase shifting unit (21, 22, 23) provides for a phase shift between 10° and 90°.

2. Front end (8) according to claim 1, wherein the mobile communication device (1) comprises at least two antennas, a first antenna (4) and a second antenna (5).

3. Front end (8) according to claim 2, wherein the first antenna (4) is connected to the first input (10) of the front end.

4. Front end (8) according to claim 2 or 3, wherein the second antenna (5) is connected to the second input (11) of the front end.

5. Front end (8) according to one of the foregoing claims, wherein the phase shifter (9, 42) comprises a transmission line (40).

6. Front end (8) according to one of the foregoing claims, wherein the front end (8) is implemented as an integrated circuit.

7. Front end (8) according to claim 1, wherein a phase shifting (21, 22, 23, 35) unit provides for a phase shift between 10° and 90°, in particular for a phase shift of 45° or 90°.

8. Front end (8) according to claim 1 or 7, wherein at least one phase shift unit (21, 22, 23, 35) includes at least one inductive element (30) and at least one capacitor (34).

9. Front end (8) according to claim 8, wherein the inductive element (30) and the capacitor (34) are dimensioned such that they can be implemented in an integrated circuit.

10. Mobile communication device (1) comprising a front end (8) according to one of the foregoing claims, wherein the phase shifter (9) comprises three phase shifting units (21, 22 and 23), each of which provides for a phase shift of 90°, such that the phase shifter (9) provides at a first point (25) a signal being the sum of the first signal and the second signal being delayed by 270°, the phase shifter (9) provides at a second point (26) a signal being the sum of the first signal being delayed by 90° and the second signal being delayed by 180°, the phase shifter (9) provides at a third point (27) a signal being the sum of the first signal being delayed by 180° and the second signal being delayed by 90°, and the phase shifter (9) provides at a fourth point (28) a signal being the sum of the first signal being delayed by 270° and the second signal.

## Patentansprüche

1. Frontend (8) für eine Mobilkommunikationsvorrichtung (1), die ein Mobiltelefon oder Mobilcomputer insbesondere gemäß dem GSM- oder UMTS-Standard ist, wobei das Frontend mindestens zwei Eingänge, einen ersten Eingang (10) und einen zweiten Eingang (11), umfasst, mit einem Phasenschieber (9, 42), der die Phase eines von dem ersten Eingang (10) durch den Phasenschieber (9, 42) zu dem zweiten Eingang (11) verlaufenden ersten Signals um eine vorbestimmte Phasenverschiebung verschieben kann und die Phase eines von dem zweiten Eingang (11) durch den Phasenschieber (9, 42) verlaufenden zweiten Signals verschieben kann, wobei das Frontend (8) einen Selektor (20) zum Auswählen eines Ausgangssignals zwischen dem ersten Eingang (10) und dem zweiten Eingang (11) umfasst,
**dadurch gekennzeichnet, dass**
der Selektor (20) das Ausgangssignal so auswählen kann, dass das Ausgangssignal die Summe des um eine erste Phasenverschiebung zwischen 0 und der vorbestimmten Phasenverschiebung verzögerten ersten Signals und des um eine zweite Phasenverschiebung, die die Differenz zwischen der vorbestimmten Phasenverschiebung und der ersten Phasenverschiebung ist, verzögerten zweiten Signals ist, wobei der Phasenschieber (9, 42) mindestens zwei, insbesondere drei, Phasenverschiebungseinheiten (21, 22, 23, 35) umfasst und eine Phasenverschiebungseinheit (21, 22, 23) eine Phasenverschiebung zwischen 10° und 90° bereitstellt.

2. Frontend (8) nach Anspruch 1, wobei die Mobilkommunikationsvorrichtung (1) mindestens zwei Antennen, eine erste Antenne (4) und eine zweite Antenne (5), umfasst.

3. Frontend (8) nach Anspruch 2, wobei die erste Antenne (4) mit dem ersten Eingang (10) des Frontend verbunden ist.

4. Frontend (8) nach Anspruch 2 oder 3, wobei die zweite Antenne (5) mit dem zweiten Eingang (11) des Frontend verbunden ist.

5. Frontend (8) nach einem der vorhergehenden Ansprüche, wobei der Phasenschieber (9, 42) eine Übertragungsleitung (40) umfasst.

6. Frontend (8) nach einem der vorhergehenden Ansprüche, wobei das Frontend (8) als eine integrierte Schaltung implementiert ist.

7. Frontend (8) nach Anspruch 1, wobei eine Phasenverschiebungseinheit (21, 22, 23, 35) eine Phasenverschiebung zwischen 10° und 90°, insbesondere eine Phasenverschiebung von 45° oder 90°, bereitstellt.

8. Frontend (8) nach Anspruch 1 oder 7, wobei mindestens eine Phasenverschiebungseinheit (21, 22, 23, 35) mindestens ein induktives Element (30) und mindestens einen Kondensator (34) umfasst.

9. Frontend (8) nach Anspruch 8, wobei das induktive Element (30) und der Kondensator (34) so dimensioniert sind, dass sie in einer integrierten Schaltung implementiert werden können.

10. Mobilkommunikationsvorrichtung (1) mit einem Frontend (8) nach einem der vorhergehenden Ansprüche, wobei der Phasenschieber (9) drei Phasenverschiebungseinheiten (21, 22 und 23) umfasst, die jeweils eine Phasenverschiebung von 90° bereitstellen, so dass der Phasenschieber (9) an einem ersten Punkt (25) ein Signal bereitstellt, bei dem es sich um die Summe des ersten Signals und des zweiten Signals, das um 270° verzögert ist, handelt, der Phasenschieber (9) an einem zweiten Punkt (26) ein Signal bereitstellt, bei dem es sich um die Summe des ersten Signals, das um 90° verzögert ist, und des zweiten Signals, das um 180° verzögert ist, handelt, der Phasenschieber (9) an einem dritten Punkt (27) ein Signal bereitstellt, bei dem es sich um die Summe des ersten Signals, das um 180° verzögert ist, und des zweiten Signals, das um 90° verzögert ist, handelt, und der Phasenschieber (9) an einem vierten Punkt (28) ein Signal bereitstellt, bei dem es sich um die Summe des ersten Signals, das um 270° verzögert ist, und des zweiten Signals handelt.

## Revendications

1. Extrémité frontale (8) pour un dispositif de communication mobile (1), qui est un téléphone cellulaire ou un ordinateur mobile, en particulier selon la norme GSM ou UMTS, l'extrémité frontale comprenant au moins deux entrées, une première entrée (10) et une seconde entrée (11),
comprenant un déphaseur (9, 42) qui peut changer la phase d'un premier signal se propageant à travers le déphaseur (9, 42) depuis la première entrée (10) jusqu'à la seconde entrée (11) au moyen d'un déphasage prédéterminé et peut changer la phase d'un second signal se propageant à travers le déphaseur (9, 42) depuis la seconde entrée (11),
dans laquelle l'extrémité frontale (8) comprend un sélecteur (20) pour sélectionner un signal de sortie entre la première entrée (10) et la seconde entrée (11),
**caractérisé en ce que**
le sélectionneur (20) peut sélectionner le signal de sortie de telle sorte que le signal de sortie soit la somme du premier signal qui est retardé par un premier déphasage entre 0 et le déphasage prédéterminé et du second signal qui est retardé par un second déphasage qui est la différence entre le déphasage prédéterminé et le premier déphasage,
dans laquelle le déphaseur (9, 42) comprend au moins deux, en particulier trois, unités de déphasage (21, 22, 23, 35), une unité de déphasage (21, 22, 23) permet un déphasage entre 10° et 90°.

2. Extrémité frontale (8) selon la revendication 1, dans laquelle le dispositif de communication mobile (1) comprend au moins deux antennes, une première antenne (4) et une seconde antenne (5).

3. Extrémité frontale (8) selon la revendication 2, dans laquelle la première antenne (4) est raccordée à la première entrée (10) de l'extrémité frontale.

4. Extrémité frontale (8) selon la revendication 2 ou 3, dans laquelle la seconde antenne (5) est raccordée à la seconde entrée (11) de l'extrémité frontale.

5. Extrémité frontale (8) selon l'une quelconque des revendications précédentes, dans laquelle le déphaseur (9, 42) comprend une ligne de transmission (40).

6. Extrémité frontale (8) selon l'une quelconque des revendications précédentes, dans laquelle l'extrémité frontale (8) est mise en oeuvre sous la forme d'un circuit intégré.

7. Extrémité frontale (8) selon la revendication 1, dans laquelle une unité de déphasage (21, 22, 23, 35) permet un déphasage entre 10° et 90°, en particulier un déphasage de 45° ou de 90°.

8. Extrémité frontale (8) selon la revendication 1 ou 7, dans laquelle au moins une unité de déphasage (21, 22, 23, 35) comprend au moins un élément inductif (30) et au moins un condensateur (34).

9. Extrémité frontale (8) selon la revendication 8, dans laquelle l'élément inductif (30) et le condensateur (34) sont dimensionnés de telle sorte qu'ils puissent être mis en oeuvre dans un circuit intégré.

10. Dispositif de communication mobile (1) comprenant une extrémité frontale (8) selon l'une quelconque des revendications précédentes, dans lequel le déphaseur (9) comprend trois unités de déphasage (21, 22 et 23) qui permettent chacune un déphasage de 90° de telle sorte que le déphaseur (9) fournisse à un premier point (25) un signal qui est la somme du premier signal et du second signal qui est retardé de 270°, que le déphaseur (9) fournisse à un deuxième point (26) un signal qui est la somme du premier signal qui est retardé de 90°, et du second signal qui est retardé de 180°, que le déphaseur (9) fournisse à un troisième point (27) un signal qui est la somme du premier signal qui est retardé de 180°, et du second signal qui est retardé de 90° et que le déphaseur (9) fournisse à un quatrième point (28) un signal qui est la somme du premier signal qui est retardé de 270°, et du second signal.
